Europäisches Patentamt

European Patent Office

Office européen des brevets

(19)

(11) Publication number: **0 152 418**

**B1**

(12) **EUROPEAN PATENT SPECIFICATION**

(45) Date of publication of patent specification: **17.11.88**

(51) Int. Cl.⁴: **G 02 B 23/12**

(21) Application number: **84902834.5**

(22) Date of filing: **06.07.84**

(86) International application number:
**PCT/SE84/00254**

(87) International publication number:
**WO 85/00433 31.01.85 Gazette 85/03**

(54) **A NIGHT VISION INSTRUMENT WITH ELECTRONIC IMAGE CONVERTER.**

(30) Priority: **07.07.83 SE 8303889**

(43) Date of publication of application:
**28.08.85 Bulletin 85/35**

(45) Publication of the grant of the patent:
**17.11.88 Bulletin 88/46**

(84) Designated Contracting States:
**DE FR GB NL**

(56) References cited:
**DE-B-1 572 768**
**DE-B-2 060 897**
**DE-B-2 158 462**
**FI-C- 20 541**

(73) Proprietor: **SIMRAD OPTRONICS A/S**
**P.O. Box 6114 Etterstad**
**N-0602 Oslo 6 (NO)**

(72) Inventor: **VOGL, Georg**
**Branta Stigen 20**
**S-133 00 Saltsjöbaden (SE)**

(74) Representative: **Grennberg, Erik Bertil et al**
**H. ALBIHNS PATENTBYRA AB P.O. Box 3137**
**S-103 62 Stockholm (SE)**

Courier Press, Leamington Spa, England.

## Description

The invention relates to a night vision instrument as of the preamble of claim 1.

A night vision instrument consists of a high speed optical system which projects an image of an object onto the photocathode of an image intensifier tube or similar device. The photons incident on the photocathode create electrons which are multiplied and focused onto a phosphorous screen so that an intensified image of the object is obtained. This image is viewed with the aid of for example an eyepiece or a microscope. Sometimes the image is transferred optically into a telescope through which it can be viewed alternately with the ordinary daylight view of the object. The optical secondary system may consist of a collimator lens (eyepiece) which creates an image of the phosphorous screen at an infinite image distance. This image is often inverted by means of a fiber optical twister or by electronic technique inside the tube.

The need of a large relative aperture often makes it useful to use a specially designed catadioptric mirror objective of the cassegrain type, consisting of a large light-gathering primary mirror with a central through-hole, and a smaller secondary mirror in front of the primary mirror, usually applied on a correction lens. The rays from the object will first pass beside the secondary mirror, then be reflected twice and finally be focused into an image, usually located close to the through-hole in the primary mirror. The central obstruction caused by the secondary mirror may thus be considerable.

Another drawback in prior art systems is the relatively low reflection coefficient of the secondary mirror, causing a reduction of the energy efficiency. Deformations of the secondary mirror due to mechanical or thermal disturbances may moreover reduce the sensitivity, because the incident photons are spread over a larger area of the image intensifier photocathode.

This drawback is removed, according to the invention, by making an arrangement such that the primary mirror projects its image directly, i.e. without deviation by a further mirror, onto the photocathode of the image intensifier. Such an arrangement also has other advantages, which will be apparent from the following description.

The invention shall now be described in more detail by means of the drawings. Fig. 1 shows a prior art instrument. Fig. 2 shows an embodiment of the invention. Fig. 3 shows another embodiment of the invention.

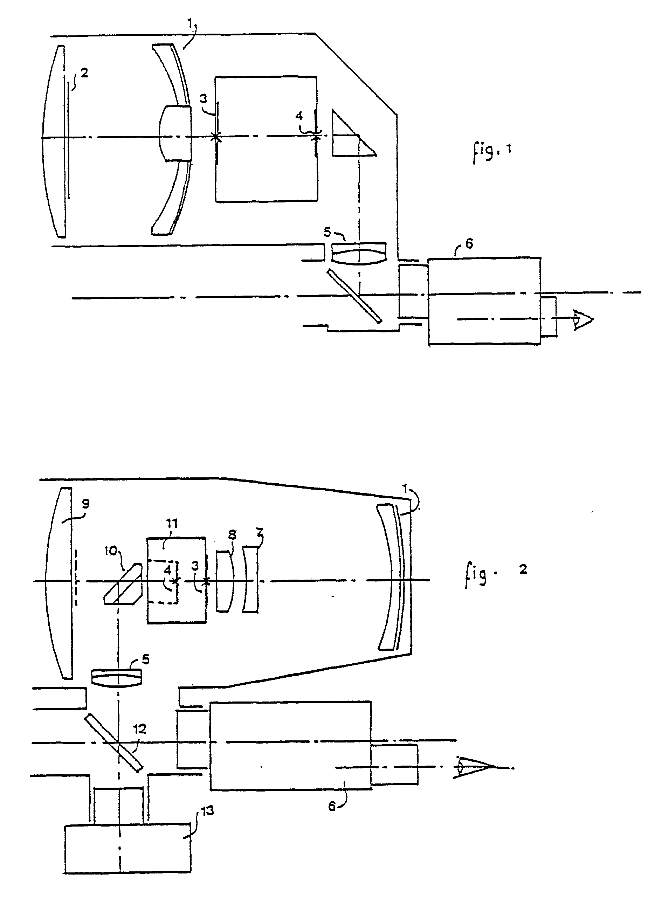

FIGURE 1 shows a commonly known and used prior art construction drawn to approximately correct proportions. The primary mirror 1 creates an image which is focused via the secondary mirror 2 onto the photocathode 3. The image intensifier screen 4 may be viewed through an eyepiece, or the optical information may be transferred as shown into a daylight telescope 6 by means of a collimation objective 5.

Comfortable handheld operation in this application is evidently impaired by the fact that the centre of gravity is located quite far forward near the front lens.

According to the invention, the photocathode of the image intensifier is localized directly on the image plane of the primary mirror. Via suitable prisms and/or mirrors, the phosphorous screen may then be viewed from the side of the intensifier which is turned toward the object. Under, above or along the side of this night vision system there exists a natural space where for example a daylight telescope may be placed so that the image transfer from the night vision instrument can be arranged in a straight forward way via the entrance aperture of the daylight telescope. The daylight telescope and the night vision instrument may consequently be positioned side by side so that a compact configuration is obtained with the centre of gravity far backwards, making it suitable for handheld use.

All the drawbacks associated with a secondary mirror can moreover be avoided in this simple manner.

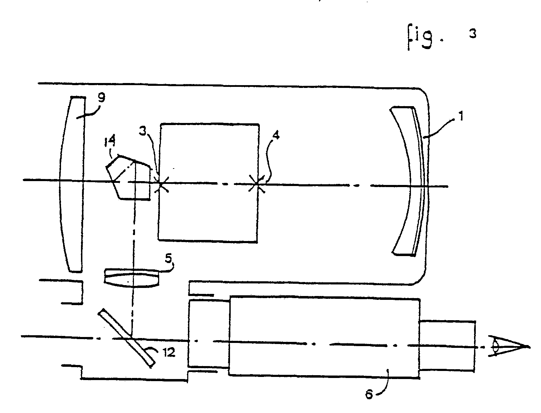

FIGURE 2 shows an embodiment of the invention, again in correct proportions. An image of the object is created by the mirror 1 onto the image intensifier photocathode 3, and the screen 4 of the tube 11 is viewed via e.g. a prism 10, a mirror 12 and a collimation objective 5, through the daylight telescope 6.

At the same time, it is possible to photograph the image by means of a camera 13.

Correction lenses 7, 8 may, or may not, be inserted between the primary mirror 1 and the image intensifier tube 11. The window 9, which seals and protects the internal parts of the night vision instrument, may be shaped into a lens, as shown.

A comparison with Figure 1 reveals a further advantage: The size of the central obstruction in Figure 2 is set by the external diameter of the image intensifier, which is about 40 to 55 mm. With a prior art night vision instrument as of Figure 1, the diameter of the obstructing secondary mirror is determined by the geometry of the objective lens and the field of view. For example, with a 100 mm objective focal length an obstruction diameter of about 60 mm is required. Any increase of the objective focal length and the entrance aperture will, however, lead to a proportional increase of the size of the secondary mirror.

According to the Figure 2 embodiment, contrarily, the image intensifier diameter will remain unaltered for different focal lengths and apertures, and this advantage becomes all the more pronounced as the night vision instrument is augmented in size.

It must be considered, when constructing an objective lens according to the invention, that the power of correction of the prior art secondary mirror is absent but an equivalence correction may be achieved in other ways. All commonly used elements for the construction of a mirror objective may otherwise be used, like aspherical and spherical mirrors, so-called Mangin mirrors, spherical and aspherical correction lenses and symmetrical and null-lenses.

A right angle roof prism 10 in combination with a mirror (or equivalent prism), as shown in Figure 2 is a suitable combination for transferring the image from the photocathode screen 4 for viewing in the daylight telescope 6. A non-inverting image intensifier should be used in this case.

If an inverting image intensifier is used, the image transfer may be arranged according to Figure 3, where a pentagon prism 14 followed by a mirror 12 (or prism) is used.

The mirror/prism in front of the daylight telescope 6 may be made partly transparent, so that an ordinary daylight view of the object can be seen through the mirror 12 simultaneously with a corresponding intensified night scene composed of light which is reflected by the same mirror 12.

In the embodiments shown, the use of an ordinary type of image intensifier tube is presumed. The utility of the invention is, however, certainly not limited to this specific technique. Other electronic image converters are equally applicable in the invention. They may function according to various principles, and/or at different wavelengths, as for example such that work in the infrared (IR) wavelength region.

## Claims

1. A night vision instrument provided with a catadioptric objective comprising a concave primary mirror (1) providing a real image of the object, and with an electronic image intensifier or converter (11) comprising a photocathode (3), characterized in that the arrangement is such that the primary mirror (1) directly, i.e. without deviation by a further mirror, projects its image on the said photocathode.

2. A night vision instrument according to Claim 1, characterized in that the visible image created by the electronic image intensifier or converter (11), lies closer to the object than the said real image.

3. A night vision instrument according to Claim 1 and 2, characterized in that the primary mirror (1) projects the rays coming from the object, back into the direction toward the object, possibly via correction lenses (7, 8), onto the said photocathode (3) of the said image intensifier or converter (11), in which the real image is intensified or converted so as to produce a visible image on an image screen (4), which image is finally transferred by means of prisms and/or mirrors and lenses (10, 5, 12) to a telescope (6), a camera, a TV-camera, a sight or a similar device.

4. A night vision instrument according to Claim 3, characterized in that the image transfer from the electronic image intensifier or converter (11) to the entrance of a telescope (6) etc. is performed by means providing for three reflections or less, e.g. a pentagon prism or a right angle roof prism and a flat mirror (12).

5. A night vision instrument according to Claim 3, characterized in that the image transfer from the image screen (4) of the electronic image intensifier or converter to the telescope (6) etc., is performed without any intermediate real image.

## Patentansprüche

1. Nachtsichtgerät mit einem katadioptrischen Objektiv, umfassend einen konkaven Primärspiegel (1), der ein reelles Bild des Objekts liefert, und mit einem elektronischen Bildverstärker oder -umwandler (11), umfassend eine Photokathode (3), dadurch gekennzeichnet, daß die Anordnung so getroffen ist, daß der primäre Spiegel (1) sein Bild unmittelbar, d.h. ohne Ablenckung durch einen weiteren Spiegel, auf die Photokathode projiziert bzw. wirft.

2. Nachtsichtgerät nach Anspruch 1, dadurch gekennzeichnet, daß das durch den elektronischen Bildverstärker oder -umwandler (11) erzeugte oder entworfene Bild dichter am Objekt als am rellen Bild liegt.

3. Nachtsichtgerät nach Anspruch 1 oder 2, dadurch gekennzeichnet, daß der primäre Spiegel (1) die vom Objekt kommenden Strahlen in der Richtung zum Objekt hin, ggf. über Korrekturlinsen (7, 8), auf die Photokathode (3) des Bildverstärkers oder -umwandlers (11) zurückwirft, wobei das reelle Bild verstärkt oder umgewandelt wird, um auf einem Bildschirm (4) ein sichtbares Bild zu erzeugen oder zu entwerfen, das schließlich über Prismen und/oder Spiegel sowie Linsen (10, 5, 12) zu einem Teleskop (6), einer Kamera, einer Fernsehkamera, einem Visier- bzw. Sichtgerät oder einer ähnlichen Vorrichtung übertragen wird.

4. Nachtsichtgerät nach Anspruch 3, dadurch gekennzeichnet, daß die Bildübertragung vom elektronischen Bildverstärker oder -umwandler (11) zum (zur) Eintritt(söffnung) eines Teleskops (6) usw. durch eine Einrichtung erfolgt, die für drei Reflexionen oder weniger sorgt, z.B. ein pentagonprisma oder ein rechtwinkeliges Dachprisma und ein Flachspiegel (12).

5. Nachtsichtgerät nach Anspruch 3, dadurch gekennzeichnet, daß die Bildübertragung vom Bildschirm (4) des elektronischen Bildverstärkers oder -umwandlers zum Teleskop (6) usw. ohne relles Zwischenbild erfolgt.

## Revendications

1. Un instrument de vision nocturne prévu avec un objectif catadioptrique comprenant un miroir primaire concave (1) donnant une image réelle de l'objet, et un renforçateur ou convertisseur d'image électronique (11) comportant une photocathode (3), caractérisé en ce que la disposition est telle que le miroir primaire (1) projette directement son image sur ladite photocathode, c'est-à-dire sans déviation par l'intermédiaire d'un autre miroir.

2. Un instrument de vision nocture selon la revendication 1, caractérisé en ce que l'image visible engendrée par le renforçateur ou convertisseur d'image électronique (11) se trouve plus près de l'objet que ladite image réelle.

3. Un instrument de vision nocturne selon la revendication 1 ou 2, caractérisé en ce que le miroir primaire (1) renvoie les rayons provenant de l'objet dans la direction de l'objet, éventuellement par l'intermédiaire de lentilles de correction (7, 8), sur ladite photocathode (3) dudit renforçateur ou convertisseur d'image électronique (11) dans lequel l'image réelle est renforcée ou convertie de façon à produire une image visible sur un écran à image (4), laquelle image est finalement transférée au moyen de prismes et/ou de miroirs et de lentilles (10, 5, 12) à un télescope (6), une caméra, une caméra de télévision, un viseur ou un dispositif du même genre.

4. Un instrument de vision nocturne selon la revendication 3, caractérisé en ce que le transfert d'image du renforçateur ou convertisseur d'image électronique (11) à l'entrée d'un télescope, etc., est effectué par un moyen produisant trois réflexions ou moins, par exemple un prisme pentagonal ou un prisme à sommet à angle droit et un miroir plat (12).

5. Un instrument de vision nocturne selon la revendication 3, caractérisé en ce que le transfert d'image de l'écran à image (4) du renforçateur ou convertisseur d'image électronique (6) au télescope (6), etc., est effectué sans image réelle intermédiaire.

fig. 1

fig. 2

Fig. 3